# EUROPEAN PATENT SPECIFICATION

(11) **EP 4 119 115 B1**
(45) Date of publication and mention of the grant of the patent: **25.09.2024**
(21) Application number: 22179870.5
(22) Date of filing: 20.06.2022
(51) Int. Cl.: A61H 3/06, G06K 7/10, H02J 7/00, H02J 50/12, H02J 50/00

(54) **RFID DEVICE AND NON-CONTACT CHARGING SYSTEM**
RFID-VORRICHTUNG UND KONTAKTLOSES LADESYSTEM
DISPOSITIF RFID ET SYSTÈME DE CHARGE SANS CONTACT

(30) Priority: 15.07.2021 JP 2021117395
(43) Date of publication of application: 18.01.2023
(73) Proprietor: Toshiba TEC Kabushiki Kaisha, Tokyo 141-8562 (JP)
(72) Inventor: Ishikawa, Hiroyuki, Shinagawa-ku, Tokyo, 141-8562 (JP); Oishi, Sadatoshi, Shinagawa-ku, Tokyo, 141-8562 (JP)
(74) Representative: Hoffmann Eitle

(56) References cited:
- CN-A- 109 276 419
- GB-A- 2 575 506
- JP-A- 2003 249 880
- US-A1- 2016 178 378
- US-A1- 2020 340 848

## Description

### FIELD

Embodiments described herein relate generally to an RFID device and a non-contact charging system.

### BACKGROUND

An RFID device that a user can carry is known for a long time. The RFID device includes a battery and reads an RFID tag by power supplied from the battery. Since the RFID device is carried and operated by the user, miniaturization thereof is required.

In order to charge the battery, a technique for performing charging by a charging cable, and a technique for performing charging by taking out the battery from the RFID device and mounting the battery on a charger are also known.

However, the work of connecting and disconnecting the charging cable and mounting the battery thereon is complicated. For example, a technique in which the RFID device is used for a white cane is also known. However, since many white cane users are visually impaired individuals, it may be difficult to connect and disconnect the charging cable, and to mount the battery thereon. Therefore, it is required to achieve a technique in which the RFID device can be easily charged.

For example, it is also possible to charge the battery by using a non-contact charging technique. However, if the RFID device is miniaturized, a power receiving coil for performing non-contact charging may affect an antenna.

GB2575506 A relates to a human user interface device 10 for incorporation into a smart cane for the visually impaired or a shoe comprises a sender 12 operatively connected to a receiver 14, the sender 12 comprising a short-range wireless RFID receiver 16 and the receiver 16 comprising a processor and an output device 24 which, upon detection of a signal 26 by the receiver 16 from, for example, a passive RFID tag 28, outputs a speech-audio signal 30.

### SUMMARY OF THE INVENTION

One of the objects of the present invention is to improve prior art techniques and overcome at least some of the prior art problems as for instance above illustrated.

According to a first aspect of the present invention, it is provided an RFID device comprising a case including a rotation mechanism; an antenna disposed in the case; and a cylindrical power receiving coil disposed in the case away from the antenna and extending in an axial direction of the rotation mechanism, and connected to a power receiver configured to charge a battery.

Optionally, in the device according to the first aspect of the invention, the power receiving coil is disposed coaxially with a rotation axis of the rotation mechanism, and a diameter of the power receiving coil is smaller than a diameter of a cylindrical power transmitting coil that is configured to perform non-contact charging with the power receiving coil.

Optionally, the device according to the first aspect of the invention further comprises a cut-off circuit configured to cut off power supply from the battery to an RFID module connected to the antenna when the power receiving coil receives power from the power transmitting coil.

Optionally, the device according to the first aspect of the invention further comprises a communication interface configured to transmit information read by the RFID module to the outside, wherein the battery, the power receiver, the RFID module, and the communication interface are provided in the case.

According to a second aspect of the invention, it is provided a non-contact charging system, comprising the RFID device according to the first aspect; and a cylindrically formed power transmitting table including a power transmitting device, the power transmitting device including a power transmitting coil and a power transmitting circuit, and enabling the RFID device to be disposed therein.

Optionally, in the device according to the first aspect of the invention, RFID device includes a ferrule.

Optionally, in the device according to the first aspect of the invention, the RFID device further comprises a plurality of housings.

Optionally, in the device according to the first aspect of the invention, the plurality of housings includes a first housing formed of resin.

Optionally, in the device according to the first aspect of the invention, the plurality of housings includes a first housing having a tubular shape.

Optionally, in the device according to the first aspect of the invention, the plurality of housings includes a first housing which accommodates the antenna and the power receiving coil.

Optionally, in the device according to the first aspect of the invention, the plurality of housings includes a first housing having an outer shape having a spherical shape, a polygonal columnar shape, or a gourd shape.

Optionally, in the device according to the first aspect of the invention, the plurality of housings includes a first housing, a second housing and third housing, the first housing contacting the third housing, the second housing disposed between the first housing and the third housing.

Optionally, in the device according to the first aspect of the invention, the plurality of housings includes a first housing, a second housing and a third housing, the first housing including one or more insertion portions arranged to insert into one or more respective grooves of the third housing.

Optionally, in the device according to the first aspect of the invention, the first housing includes a guide display arranged adjacent to the one or more insertion portions.

Optionally, in the device according to the first aspect of the invention, the plurality of housings includes a first housing having a rib formed integrally on an upper surface of a bottom portion of the first housing.

Optionally, in the device according to the first aspect of the invention, the plurality of housings includes a first housing and a second housing, wherein an outer diameter of the second housing is less than an inner diameter of the first housing.

Optionally, in the device according to the first aspect of the invention, the plurality of housings includes a first housing, a second housing and a third housing, the third housing having a shaft portion and a bearing member which form the rotation mechanism.

According to a third aspect of the invention, it is provided a system including a white cane, and the RFID device of the first aspect, wherein the RFID device is mounted on the white cane.

### DESCRIPTION OF THE DRAWINGS

FIG. 1 is an explanatory diagram showing a configuration of a communication system using an RFID device according to at least one embodiment;
FIG. 2 is a block diagram showing the configuration of the communication system using the RFID device;
FIG. 3 is an explanatory diagram showing a configuration of a white cane using the RFID device;
FIG. 4 is a block diagram showing a configuration of the RFID device;
FIG. 5 is a perspective view showing a configuration of a ferrule of the white cane;
FIG. 6 is an exploded perspective view showing the configuration of the ferrule;
FIG. 7 is a cross-sectional view showing the configuration of the ferrule;
FIG. 8 is an exploded perspective view showing a configuration of a main part of the ferrule;
FIG. 9 is a perspective view showing a configuration of a first housing used in a case of the ferrule by partially cutting out the configuration thereof;
FIG. 10 is an exploded perspective view showing the configuration of the main part of the ferrule;
FIG. 11 is a perspective view showing the configuration of the main part of the ferrule;
FIG. 12 is a side view showing a configuration of a third housing used in the case;
FIG. 13 is an exploded view showing the configuration of the third housing;
FIG. 14 is a perspective view showing a configuration of a battery and a control circuit board of the ferrule;
FIG. 15 is a perspective view showing the configuration of the battery and the control circuit board of the ferrule;
FIG. 16 is a perspective view showing a configuration of an antenna of the ferrule;
FIG. 17 is a side view showing the configuration of the antenna;
FIG. 18 is a perspective view showing the configuration of the control circuit board;
FIG. 19 is a block diagram showing a configuration of a non-contact charging system;
FIG. 20 is a perspective view showing the configuration of the non-contact charging system;
FIG. 21 is a perspective view showing the configuration of the non-contact charging system;
FIG. 22 is an explanatory diagram showing a configuration of a power receiving coil and a power transmitting coil of the non-contact charging system;
FIG. 23 is a block diagram showing a configuration of a ferrule according to another embodiment; and
FIG. 24 is a block diagram showing the configuration of the ferrule.

### DETAILED DESCRIPTION

An object to be solved by an embodiment is to provide an RFID device and a non-contact charging system capable of preventing mutual influences between a power receiving coil and an antenna.

In general, according to at least one embodiment, an RFID device includes a case, an antenna, and a power receiving coil. The case includes a rotation mechanism. The antenna is provided in the case. The power receiving coil is provided in the case away from the antenna in an axial direction of the rotation mechanism. The power receiving coil is connected to a power receiving unit (power receiver) that charges a battery. The power receiving coil has a cylindrical shape.

According to at least one embodiment, it is possible to provide an RFID device and a non-contact charging system capable of preventing mutual influences between a power receiving coil and an antenna.

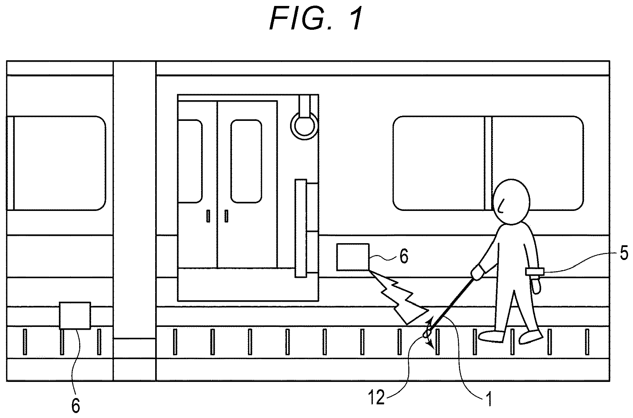

Hereinafter, configurations of a white cane 1 including an RFID device 12, a communication system 2, and a non-contact charging system 3 according to an embodiment will be described with reference to FIGS. 1 to 22.

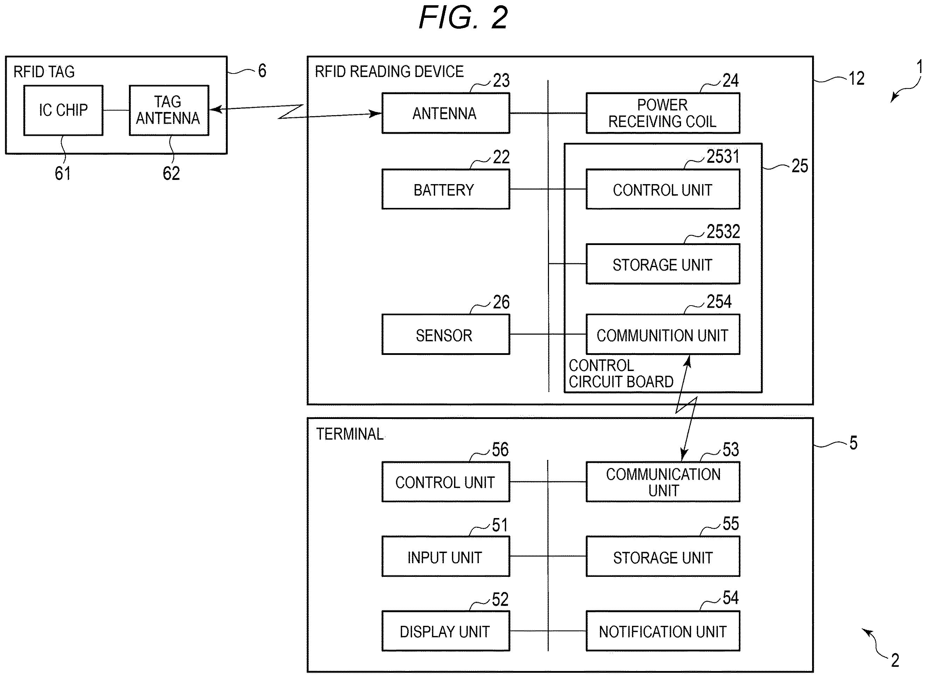

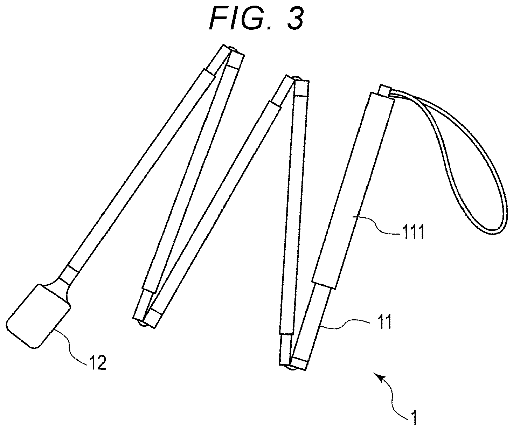

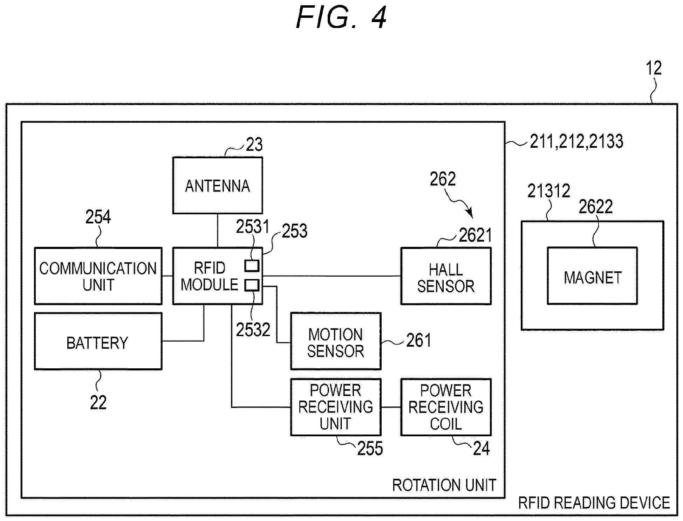

FIG. 1 is an explanatory diagram schematically showing a configuration of the communication system 2 using the white cane 1 including the RFID device 12, and FIG. 2 is a block diagram schematically showing the configuration of the communication system 2. FIG. 3 is an explanatory diagram showing a configuration of the white cane 1 using a ferrule 12 as a RFID device. FIG. 4 is a block diagram showing a configuration of the ferrule (the RFID device) 12.

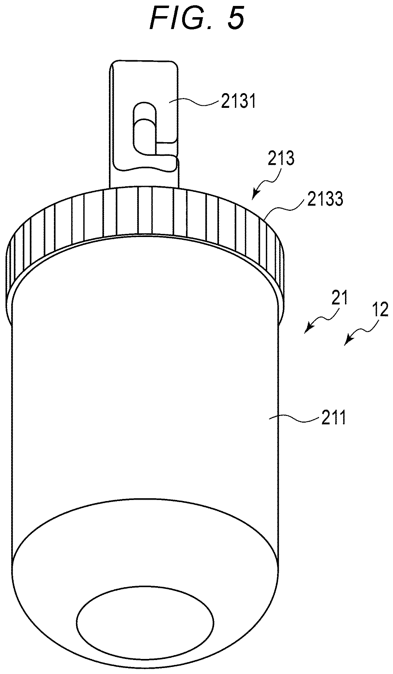

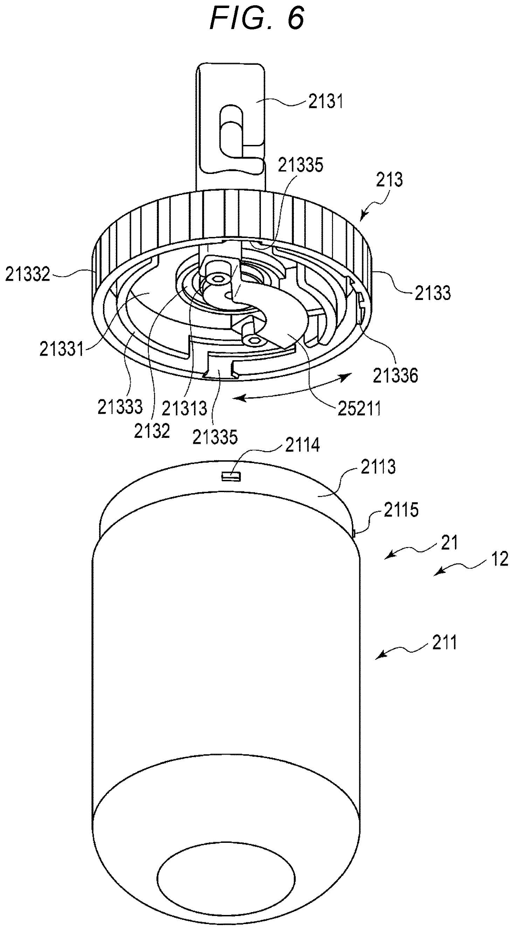

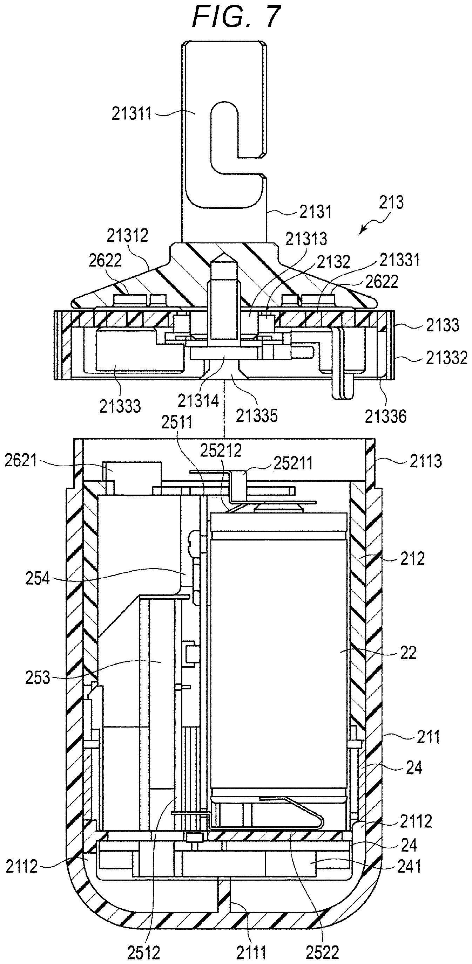

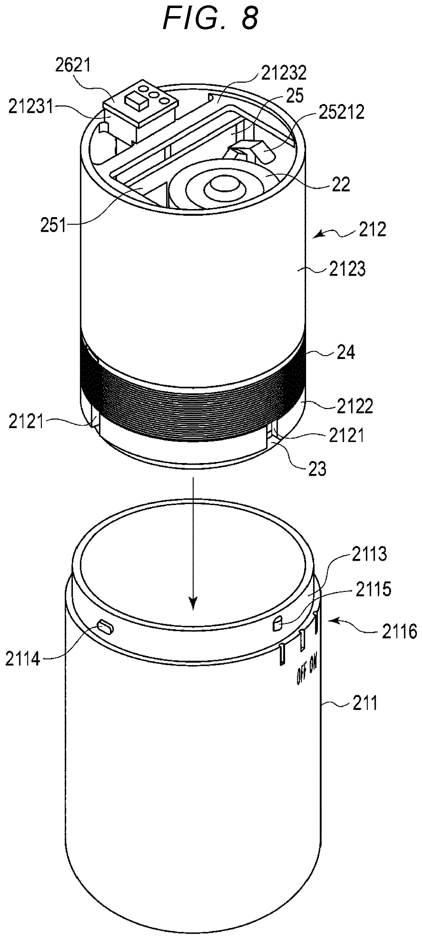

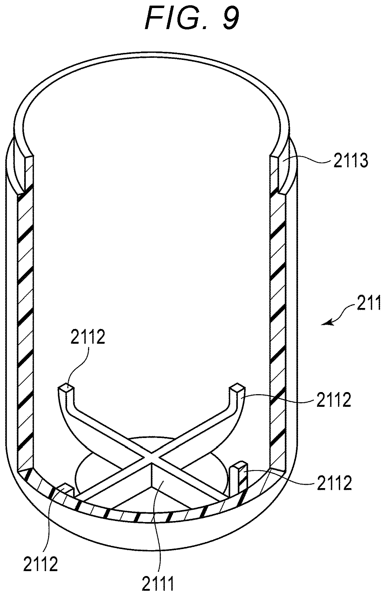

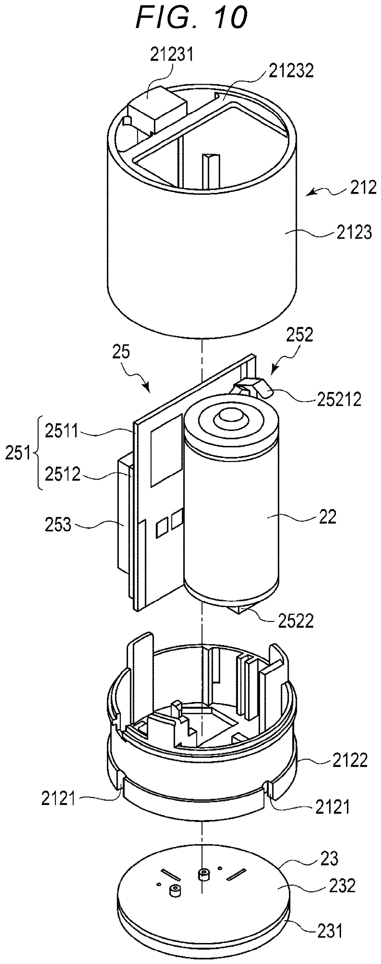

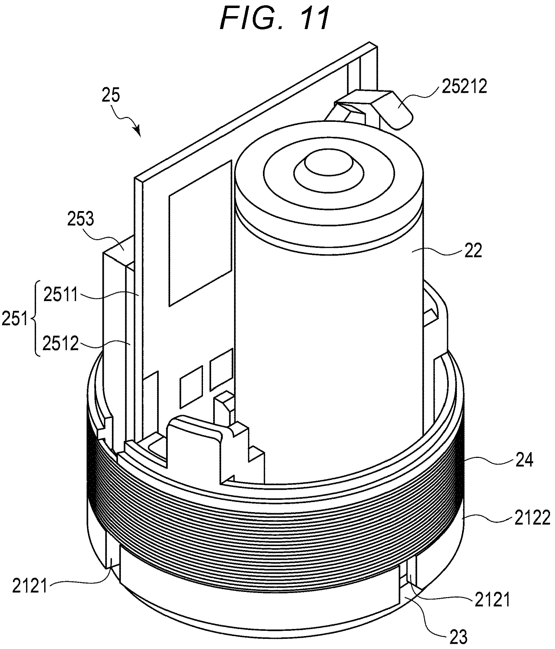

FIGS. 5 to 7 are views showing the configuration of the ferrule 12. FIG. 5 is a perspective view, FIG. 6 is an exploded perspective view, and FIG. 7 is a cross-sectional view. FIG. 8 is a perspective view showing the configuration of the ferrule 12 by omitting a third housing 213 of a case 21, and FIG. 9 is a perspective view showing a configuration of a first housing 211 used in the case 21 by partially cutting out the configuration thereof. FIG. 10 is an exploded perspective view showing configurations of a second housing 212 of the case 21, a battery 22, an antenna 23, and a control circuit board 25. FIG. 11 is a perspective view showing configurations of a first component 2122 of the second housing 212, the battery 22, and the control circuit board 25.

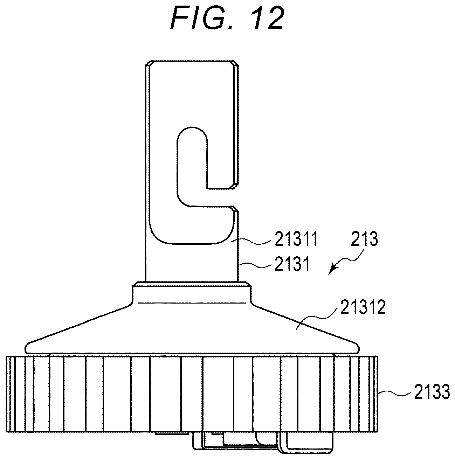

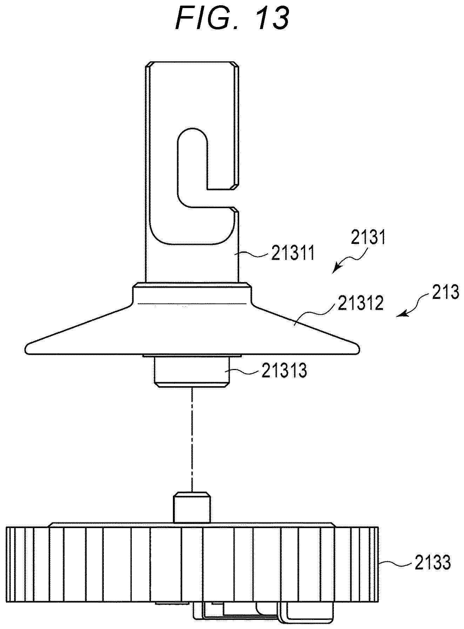

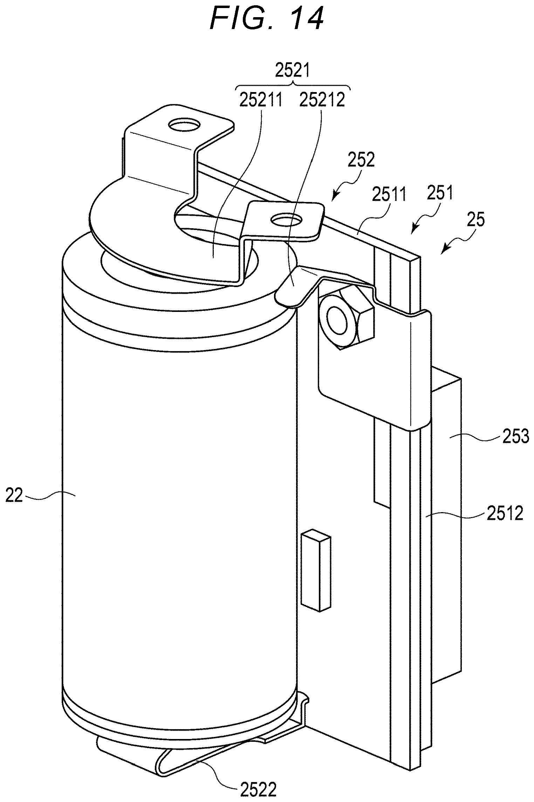

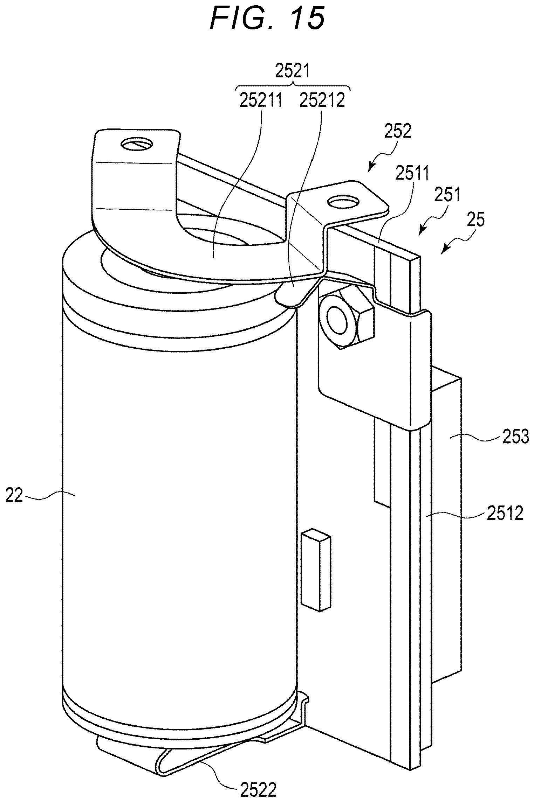

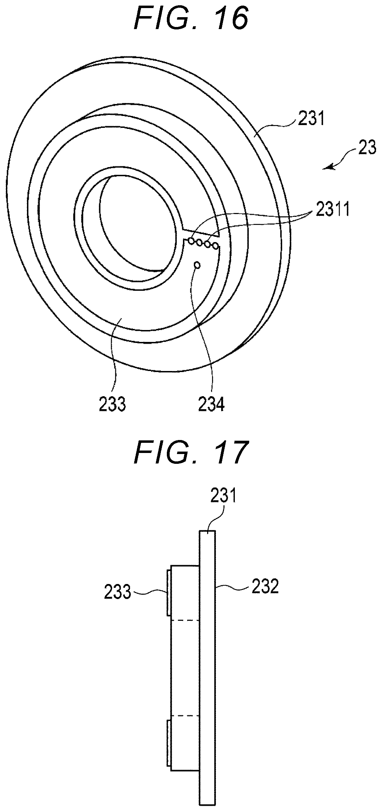

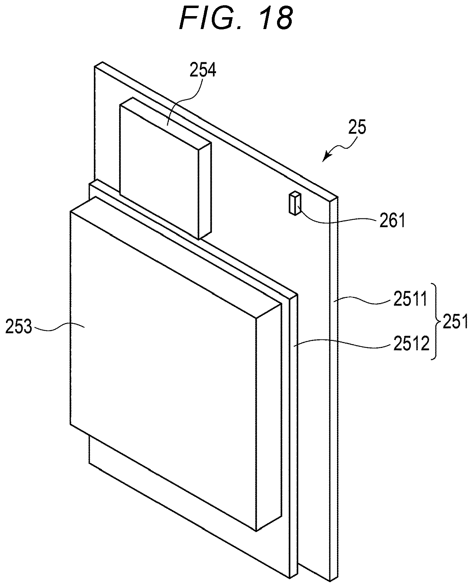

FIGS. 12 and 13 are views showing a configuration of the third housing 213, FIG. 12 shows a side view, and FIG. 13 shows an exploded view. FIG. 14 shows configurations of the battery 22 and the control circuit board 25 if the first housing 211 and the third housing 213 are in a second location. FIG. 15 shows the configurations of the battery 22 and the control circuit board 25 if the first housing 211 and the third housing 213 are in a third location. FIGS. 16 and 17 are views showing a configuration of the antenna 23, FIG. 16 is a perspective view, and FIG. 17 is a side view. FIG. 18 is a perspective view showing a configuration of the control circuit board 25.

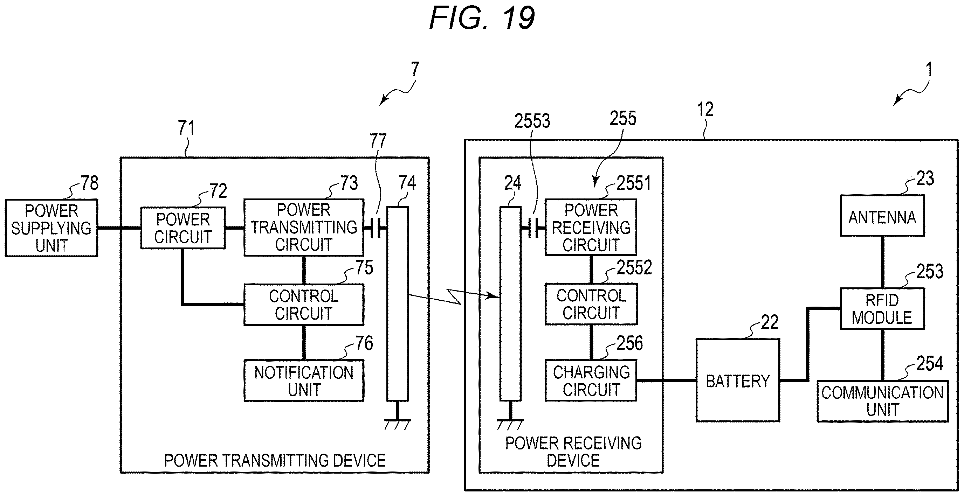

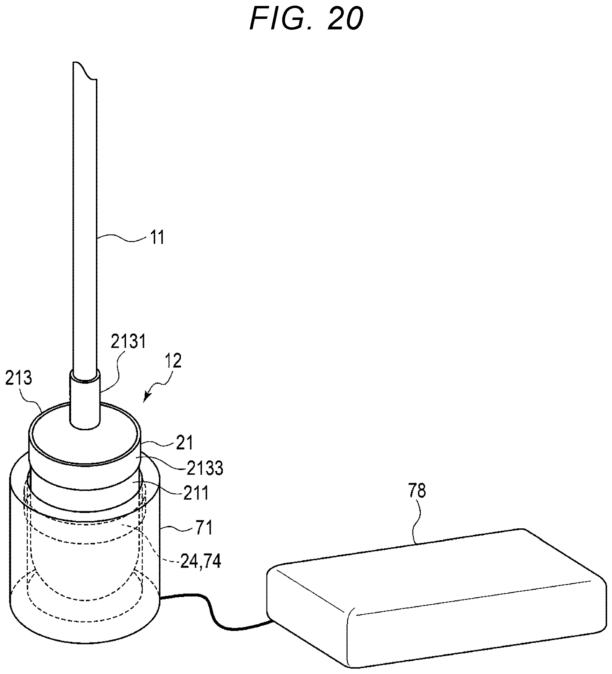

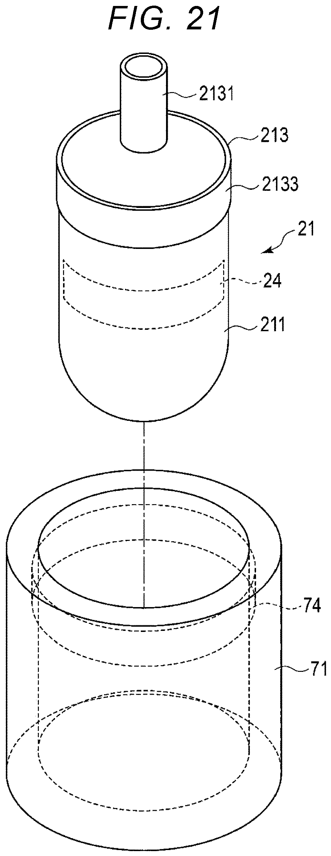

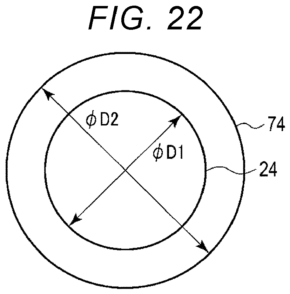

FIG. 19 is a block diagram showing a configuration of the non-contact charging system 3 according to at least one embodiment, and FIGS. 20 and 21 are perspective views showing the configuration of the non-contact charging system 3. FIG. 22 is an explanatory diagram showing configurations of a power receiving coil 24 and a power transmitting coil 74 of the non-contact charging system 3.

As shown in FIG. 1, the white cane 1 reads an RFID tag 6 on a walking path of a user by, for example, the RFID device 12, and notifies a terminal 5 of the user of read information. The RFID device 12 of the white cane 1, the terminal 5, and the RFID tag 6 form the communication system 2. As shown in FIG. 19, the RFID device 12 of the white cane 1 forms the non-contact charging system 3 together with a power transmitting device (power transmitter) 7. The non-contact charging system 3 performs non-contact charging of the RFID device 12 by transmitting power from the power transmitting device 7 to the RFID device 12 of the white cane 1.

First, the configuration of the white cane 1 will be described with reference to FIGS. 2 to 18.

As shown in FIG. 3, the white cane 1 includes a white cane main body 11 and the RFID device 12. The RFID device 12 is an RFID reading device that reads information of the RFID tag 6. Here, the RFID device 12 forms a ferrule. In the following description, the RFID device 12 will be described as a ferrule 12. A vertical direction is defined by defining a side of the ferrule 12 of the white cane 1 as a lower side, and the embodiment will be hereinafter described.

As shown in FIG. 3, for example, the white cane main body 11 is formed to be foldable in a plurality of stages. The white cane main body 11 is formed into a rod shape by unfolding the white cane main body 11. The white cane main body 11 includes a grip 111 at one end thereof, and the ferrule 12 is mounted on the other end thereof. The white cane main body 11 may be a slide type that expands and contracts or may be formed by a single shaft.

As shown in FIGS. 2 to 11, the ferrule 12 includes the case 21, the battery 22, the antenna 23, the power receiving coil 24, the control circuit board 25, and a sensor 26. For example, if the white cane 1 is used, the ferrule 12 slides left and right on the ground in a state of contacting the ground, thereby sliding on the ground while rotating with respect to the white cane main body 11.

The case 21 forms an outer shell of the ferrule 12 that rotates around a central axis coaxial with an axis of the white cane main body 11. As shown in FIGS. 7 and 8, the case 21 internally accommodates the battery 22, the antenna 23, the power receiving coil 24, the control circuit board 25, and the sensor 26 as electronic devices. As a specific example, as shown in FIGS. 5 to 8, the case 21 includes the first housing 211, the second housing 212, and the third housing 213.

The first housing 211 is an outer case of the ferrule 12. The first housing 211 accommodates the battery 22, the antenna 23, the power receiving coil 24, the control circuit board 25, and the second housing 212. A corner of the first housing 211 rotates on the ground if the ferrule 12 rotates around a central axis of the first housing 211. The first housing 211 is fixed to the third housing 213. The first housing 211 is formed of, for example, a resin material. The first housing 211 is formed of, for example, polyacetal.

As shown in FIGS. 5 to 9, the first housing 211 is formed in a bottomed tubular shape. For example, the first housing 211 is formed in a bottomed cylindrical shape. For example, a bottom portion of the first housing 211 is formed in a flat plate shape whose corner is formed in a curved surface shape or a hemispherical shape. The first housing 211 accommodates the battery 22, the antenna 23, the power receiving coil 24, the control circuit board 25, and the second housing 212, and an outer shape of the first housing 211 is appropriately set as long as the first housing 211 can slide on the ground. Other examples of the outer shape of the first housing 211 include a spherical shape, a polygonal columnar shape, a gourd shape (e.g., an oblong shape, an irregular shape), and the like.

As a specific example, as shown in FIGS. 6 to 9, the first housing 211 includes, for example, a rib 2111 extending in a radial direction, and a plurality of protrusions 2112 formed at end portions of the rib 2111 in the radial direction at a bottom portion of the interior thereof. The first housing 211 includes an insertion portion 2113, a plurality of first protruding portions 2114 formed on an outer peripheral surface of the insertion portion 2113, and a second protruding portion 2115 formed on the outer peripheral surface of the insertion portion 2113. The first housing 211 includes a guide display unit 2116 formed adjacent to the insertion portion 2113. Such insertion portions 2113 are configured as recesses.

The rib 2111 is formed to be integrated on an upper surface of the bottom portion of the first housing 211. For example, the rib 2111 extends in four directions in the radial direction from the center of the bottom portion of the first housing 211. In other words, the rib 2111 is formed in a cross shape and protrudes from the upper surface of the bottom portion of the first housing 211. An upper surface of the rib 2111 is formed in a planar shape extending in a direction orthogonal to an axial direction of the first housing 211.

The protrusion 2112 extends in the axial direction of the first housing 211 from the end portion of the rib 2111 in the radial direction. The protrusion 2112 is formed to be integrated with an inner peripheral surface of the first housing 211. The plurality of protrusions 2112 are respectively formed to be integrated with the end portions of the rib 2111 in the radial direction. In the embodiment, since the rib 2111 is formed in the cross shape, four protrusions 2112 are provided. For example, one of the four protrusions 2112 has a higher height in the axial direction than those of the other three protrusions 2112.

At least a part of the upper surface of the rib 2111 and the plurality of protrusions 2112 contacts the antenna 23, and supports the antenna 23 in the axial direction.

The insertion portion 2113 is formed at an upper end of an opening of the first housing 211. The insertion portion 2113 is inserted into the third housing 213. The insertion portion 2113 is formed to have a diameter smaller than an outer diameter on a center side of the first housing 211. For example, the insertion portion 2113 is formed by making an opening end of the first housing 211 thinner than the outer diameter on the center side of the first housing 211.

The plurality of first protruding portions 2114 are disposed at an equal space on the outer peripheral surface of the insertion portion 2113. For example, two first protruding portions 2114 are provided. The two first protruding portions 2114 are disposed, for example, at symmetrical locations on the outer peripheral surface of the insertion portion 2113. For example, the second protruding portion 2115 is provided between the two first protruding portions 2114 in a circumferential direction of the insertion portion 2113.

The guide display unit 2116 displays the location of the first housing 211 inserted into the third housing 213. For example, the guide display unit 2116 is a display that guides a location where the first housing 211 and the third housing 213 are attached and detached and a location where the power is turned ON and OFF. For example, the guide display unit 2116 are three recesses for guiding these locations, and unevenness and Braille for displaying "OFF" and "ON". That is, the guide display unit 2116 is a display that visually or tactilely guides an operation location of the ferrule 12.

As shown in FIG. 8, the second housing 212 is formed in a tubular shape formed in a shape that can be inserted into the first housing 211. The second housing 212 is accommodated in the first housing 211. For example, the second housing 212 is formed in a cylindrical shape. An outer diameter of the second housing 212 is formed to be slightly smaller than an inner diameter of the first housing 211 so that the second housing 212 can be inserted into the first housing 211. The second housing 212 accommodates or holds, for example, the battery 22, the antenna 23, the power receiving coil 24, the control circuit board 25, and the sensor 26. Movement of the second housing 212 in the circumferential direction is regulated by the first housing 211. Movement of the second housing 212 in the axial direction is regulated by the first housing 211 and the third housing 213. Accordingly, the second housing 212 is fixed to the first housing 211 and the third housing 213.

For example, the second housing 212 holds the antenna 23 at a lower end thereof . The second housing 212 accommodates, for example, the battery 22 and the control circuit board 25 inside. The second housing 212 holds, for example, the power receiving coil 24 on an outer peripheral surface thereof. The second housing 212 holds, for example, a part of the sensor 26 on an upper portion thereof. In the second housing 212, for example, four notches 2121 in which the four protrusions 2112 of the first housing 211 are disposed are formed at the lower end thereof. The notch 2121 is engaged with the protrusion 2112 in the circumferential direction, such that the movement of the second housing 212 in the circumferential direction with respect to the first housing 211 is regulated.

The second housing 212 is formed of one component or is formed by assembling a plurality of components. As a specific example, as shown in FIGS. 8 and 10, the second housing 212 includes the first component 2122 and a second component 2123. The second housing 212 is formed by assembling the first component 2122 and the second component 2123 to be integrated with each other.

The first component 2122 is formed in a tubular shape with opposite ends thereof opened. The first component 2122 holds, for example, the antenna 23 at a lower end thereof and the power receiving coil 24 on an outer peripheral surface thereof. The first component 2122 holds, for example, the battery 22 and the control circuit board 25. Lower end sides of the battery 22 and the control circuit board 25 are inserted into the first component 2122 such that the first component 2122 holds the battery 22 and the control circuit board 25. The first component 2122 is formed with a rib, a protrusion, and the like so that movement of the battery 22 and the control circuit board 25 in the radial direction and the circumferential direction can be regulated.

The second component 2123 is formed in a tubular shape with opposite ends thereof opened. For example, the second component 2123 is fixed to the first component 2122 by being engaged therewith or fitted thereto with a claw, unevenness, and the like. For example, the second component 2123 is assembled into the first component 2122, thereby forming the tubular second housing 212 together with the first component 2122. The second component 2123 covers peripheries in the radial direction of the battery 22 and the control circuit board 25 held by the first component 2122. The second component 2123 includes a holding portion 21231 at an upper end thereof in which a part of the sensor 26 is provided, and a regulating portion 21232 covering an upper portion of the control circuit board 25.

The holding portion 21231 holds, for example, a hall sensor 2621 of the sensor 26 which will be described later. The regulating portion 21232 regulates movement of the control circuit board 25 in the axial direction. The regulating portion 21232 is, for example, a rib formed in the opening at the upper end of the second component 2123 and configured to face at least a part of an upper end of the control circuit board 25 in the axial direction. At the upper end of the second component 2123, a portion facing the battery 22 in the axial direction is opened.

The third housing 213 is fixed to a tip of the white cane main body 11. As shown in FIG. 5, the third housing 213 fixes the first housing 211 to be rotatable around the axial direction of the white cane main body 11. As shown in FIGS. 5 to 7, 12, and 13, the third housing 213 includes, for example, a base portion 2131 fixed to the white cane main body 11, a bearing member 2132 provided in the base portion 2131, and a lid portion 2133 fixed to the bearing member 2132.

The base portion 2131 includes, for example, a fixed portion 21311, an umbrella portion 21312 formed to be integrated with the fixed portion 21311, and a shaft portion 21313 formed to be integrated with the umbrella portion 21312.

The fixed portion 21311 is fixed to the tip of the white cane main body 11. The umbrella portion 21312 covers an upper surface of the lid portion 2133. For example, the shaft portion 21313 is coaxial with the white cane main body 11 fixed to the fixed portion 21311. The bearing member 2132 is inserted into the shaft portion 21313 or fitted thereto, and the bearing member 2132 is fixed in the axial direction by a bolt 21314.

The bearing member 2132 is, for example, a ball bearing or a needle bearing. The bearing member 2132 rotatably holds the lid portion 2133 on the shaft portion 21313.

The lid portion 2133 is rotatably fixed to the shaft portion 21313 of the base portion 2131 via the bearing member 2132. The lid portion 2133 rotates with respect to the base portion 2131. The lid portion 2133 fixes the first housing 211. The lid portion 2133 covers an end portion of the opening of the first housing 211. The lid portion 2133 is formed to be able to move the first housing 211 to two locations where the power of the ferrule 12 is turned ON and OFF in a state of fixing the first housing 211.

For example, as shown in FIG. 6, the lid portion 2133 includes a first terminal 25211 of a positive electrode terminal 2521 connected to the battery 22. If relative locations of the lid portion 2133 and the first housing 211 in the circumferential direction change, the lid portion 2133 is formed to be able to move the first terminal 25211 and switch a conduction state of the battery 22 and the control circuit board 25.

As shown in FIGS. 6 and 7, the lid portion 2133 includes a top plate portion 21331, an outer peripheral wall portion 21332, and an inner peripheral wall portion 21333. The top plate portion 21331 is formed in a disk shape. As shown in FIGS. 6, 7, and 13, the top plate portion 21331 is fixed to the bearing member 2132.

The outer peripheral wall portion 21332 is formed to be integrated with an outer peripheral edge of the top plate portion 21331. An inner diameter of the outer peripheral wall portion 21332 is larger than an outer diameter of the insertion portion 2113 of the first housing 211. The inner diameter of the outer peripheral wall portion 21332 is smaller than a circumscribed circle of a plurality of first protruding portions 2114 formed in the insertion portion 2113, which are coaxial with the central axis of the first housing 211, and a circumscribed circle of the second protruding portion 2115 formed on the insertion portion 2113, which is coaxial with the central axis of the first housing 211.

The outer peripheral wall portion 21332 includes, for example, a first groove 21335 and a second groove 21336, which are formed on an inner peripheral surface thereof. The same number of first grooves 21335 are provided as the number of first protruding portions 2114 of the insertion portion 2113. The first groove 21335 is formed so that the first protruding portion 2114 can be inserted thereinto. The first groove 21335 extends in the axial direction of the outer peripheral wall portion 21332. The first groove 21335 extends in one direction along the circumferential direction of the outer peripheral wall portion 21332 on the central side of the outer peripheral wall portion 21332 in the axial direction. Here, the one direction along the circumferential direction is a direction in which the first housing 211 and the third housing 213 are rotated and fixed.

The second groove 21336 is formed so that the second protruding portion 2115 can be inserted thereinto in the axial direction and the second protruding portion 2115 can move in the circumferential direction. For example, the second groove 21336 is formed in a shape that allows the second protruding portion 2115 to move in the circumferential direction between a first location and a second location and between the second location and a third location, and the first housing 211 and the lid portion 2133 to rotate if a force in a rotational direction equal to or greater than a certain degree is applied to the first housing 211 and the lid portion 2133. For example, if a force in the rotational direction smaller than the certain degree is applied to the first housing 211 and the lid portion 2133, the second groove 21336 regulates the movement of the second protruding portion 2115 between the first location and the second location, and between the second location and the third location.

Here, the first location is a location where the insertion portion 2113 is inserted into the lid portion 2133. The second location is a location where the insertion portion 2113 is fixed to the lid portion 2133, and, as shown in FIG. 14, a location where the first terminal 25211 and a second terminal 25212 of the positive electrode terminal 2521 are separated from each other. The third location is a location where the insertion portion 2113 is fixed to the lid portion 2133, and, as shown in FIG. 15, a location where the first terminal 25211 and the second terminal 25212 of the positive electrode terminal 2521 contact each other.

The fixing of the insertion portion 2113 to the third housing 213 in the second location and the third location indicates a state in which movement in the axial direction and relative movement in the circumferential direction of the first housing 211 and the third housing 213 are regulated. That is, in the second location and the third location, the first protruding portion 2114 of the insertion portion 2113 is located at a portion extending in the circumferential direction of the first groove 21335, such that the movement in the axial direction of the insertion portion 2113 (the first housing 211) with respect to the lid portion 2133 of the third housing 213 is regulated. In the second location and the third location, the movement of the second protruding portion 2115 is regulated by the second groove 21336, such that the movement in the circumferential direction of the first housing 211 with respect to the lid portion 2133 of the third housing 213 is regulated.

For example, the second groove 21336 is formed of, for example, a plurality of grooves extending in the axial direction and allowing the second protruding portions 2115 to be respectively disposed therein. Specifically, the second groove 21336 is formed of three grooves formed at locations corresponding to the first location, the second location, and the third location.

The inner peripheral wall portion 21333 is disposed with a predetermined gap in which the inner peripheral surface of the outer peripheral wall portion 21332 and the insertion portion 2113 can be disposed. A height of the inner peripheral wall portion 21333 from the top plate portion 21331 may be formed to be different depending on a portion. The inner peripheral wall portion 21333 may be formed by disposing a plurality of circular arc-shaped wall portions in the circumferential direction.

In the case 21 formed as described above, the base portion 2131 is fixed to the white cane main body 11. The shaft portion 21313 and the bearing member 2132 of the base portion 2131 form a rotation mechanism. The first housing 211, the second housing 212, and the lid portion 2133 rotate with respect to the base portion 2131 by the rotation mechanism (the shaft portion 21313 and the bearing member 2132), and form a rotation unit for accommodating various electronic devices. In the case 21, the protrusion 2112 and the notch 2121 are engaged with each other in the circumferential direction, such that the second housing 212 is fixed to the first housing 211 in the circumferential direction. In the case 21, the antenna 23 or the second housing 212 contacts the rib 2111 or the protrusion 2112 of the first housing 211, and the second housing 212 or the battery 22 contacts a part of the third housing 213 (for example, a part of the lid portion 2133) or the first terminal 25211 fixed to the lid portion 2133 of the third housing 213, such that the second housing 212 is fixed to the first housing 211 and the third housing 213 in the axial direction.

The battery 22 is a power source that supplies power to the antenna 23, the control circuit board 25, and the sensor 26. The battery 22 is a secondary battery.

The antenna 23 includes a radiation element. The antenna 23 is, for example, a linearly polarized wave antenna. For example, the antenna 23 is an inverted F antenna or a patch antenna (a microstrip antenna). The antenna 23 may be a circularly polarized wave antenna. For example, the antenna 23 can be disposed in the first housing 211, and is formed in a shape that can be mounted on the second housing 212. For example, an outer shape of the antenna 23 is formed in a circular shape whose diameter is equal to or less than the inner diameter of the first housing 211.

As a specific example, as shown in FIGS. 16 and 17, the antenna 23 includes a base portion 231, a ground layer 232, and an antenna pattern 233. FIG. 16 shows an example of the antenna pattern 233 and a feeding point 234. For example, the base portion 231 is formed in a disk shape having a diameter equal to or less than the inner diameter of the first housing 211. The base portion 231 may have an annular shape with an opening in the center, or may have a plate shape in which one main surface protrudes in a cylindrical shape. The antenna 23 is not limited to a circular shape as long as the antenna 23 can be disposed in the first housing 211 and mounted on the second housing 212.

The base portion 231 is formed across both main surfaces, and includes one or a plurality of through holes 2311 connecting the ground layer 232 and the antenna pattern 233. The ground layer 232 is formed on one main surface of the base portion 231. The antenna pattern 233 is formed on the other main surface of the base portion 231. The antenna pattern 233 forms the radiation element.

The power receiving coil 24 receives power transmitted from the power transmitting coil 74 and supplies the received power to a power receiving circuit 2551 which will be described later. As shown in FIGS. 8 and 11, the power receiving coil 24 is formed in a cylindrical shape. The power receiving coil 24 has a power receiving surface for receiving power in a cylindrical shape. The power receiving coil 24 is provided on the outer peripheral surface of the second housing 212. As a specific example, as shown in FIG. 11, the power receiving coil 24 is provided on the outer peripheral surface of the first component 2122 of the second housing 212.

The power receiving coil 24 is provided on the second housing 212 coaxial with the first housing 211, the second housing 212, and the third housing 213. In other words, the power receiving coil 24 is disposed coaxially with rotation center of the first housing 211, that is, the shaft portion 21313 and the bearing member 2132 of the third housing 213 forming the rotation mechanism. As shown in FIG. 19, the power receiving coil 24 forms a resonance circuit (a power receiving resonance circuit) by being connected in series or in parallel with a power receiving resonance capacitor 2553 which will be described later.

If the power receiving coil 24 serving as the power receiving resonance circuit approaches the power transmitting coil 74, the power receiving coil 24 is electromagnetically coupled with the power transmitting coil 74. In the power receiving coil 24, an induced current is generated by a magnetic field output from the power transmitting coil 74. The power receiving coil 24 may be configured as a winding structure around which an insulated electric wire is wound, or may be configured by forming a coil pattern on a cylindrical printed circuit board.

The power receiving coil 24 supplies the received AC power to the power receiving circuit 2551 which will be described later. For example, if a magnetic field resonance method is used for power transmission, a self-resonant frequency of the power receiving resonance circuit serving as the power receiving coil 24 is set to be approximately the same as a frequency transmitted by the power transmitting coil 74.

FIGS. 7, 8, 10, 11, 14, 15, and 18 show an example of the control circuit board 25. The control circuit board 25 includes a circuit board 251 and a terminal 252. The control circuit board 25 is formed so that various processes can be performed by a processing circuit, a module, a wiring pattern, and the like mounted on the circuit board 251. As a specific example, the control circuit board 25 includes an RFID module 253, a communication unit 254 (communicator or communication interface), and a power receiving unit 255. The control circuit board 25 is connected to the antenna 23 and the power receiving coil 24. The control circuit board 25 is connected to the battery 22 via the terminal 252.

The circuit board 251 is formed in, for example, a rectangular shape that can be accommodated in the second housing 212. The circuit board 251 may be formed of a plurality of circuit boards. As a specific example, the circuit board 251 includes a first circuit board 2511 and a second circuit board 2512. The first circuit board 2511 and the second circuit board 2512 are electrically connected to each other. The first circuit board 2511 and the second circuit board 2512 are disposed side by side in the second housing 212 in the radial direction of the second housing 212.

The terminal 252 is connected to the battery 22. The terminal 252 includes the positive electrode terminal 2521 and a negative electrode terminal 2522.

The positive electrode terminal 2521 contacts a positive electrode of the battery 22. As a specific example, the positive electrode terminal 2521 includes a first terminal 25211 and a second terminal 25212. The first terminal 25211 is fixed to the third housing 213. If the first housing 211, in which the second housing 212 is accommodated, is fixed to the lid portion 2133 of the third housing 213 and is located at the second location, as shown in FIGS. 7 and 14, the first terminal 25211 contacts the positive electrode of the battery 22, and is separated from the second terminal 25212. If the first housing 211, in which the second housing 212 is accommodated, is fixed to the lid portion 2133 of the third housing 213 and is located at the third location, as shown in FIGS. 7 and 15, the first terminal 25211 contacts both the positive electrode of the battery 22 and the second terminal 25212.

For example, as shown in FIGS. 6, 14 and 15, the first terminal 25211 is formed in a band shape extending in a circular arc shape. If the first housing 211 and the third housing 213 rotate relative to each other and move from the second location to the third location, the first terminal 25211 moves in the circumferential direction as the third housing 213 moves in the circumferential direction, and connects the positive electrode of the battery 22 and the second terminal 25212.

The second terminal 25212 is provided on the circuit board 251. For example, the second terminal 25212 is provided on one circuit board 251 adjacent to the battery 22 in the second housing 212. As a specific example, the second terminal 25212 is provided on an upper end side of the first circuit board 2511 in a posture of being accommodated in the second housing 212. The second terminal 25212 contacts the first terminal 25211 at the second location.

The negative electrode terminal 2522 contacts a negative electrode of the battery 22. For example, the negative electrode terminal 2522 is provided on one circuit board 251 adjacent to the battery 22 in the second housing 212. As a specific example, the negative electrode terminal 2522 is provided at a lower end of the first circuit board 2511 in a posture of being accommodated in the second housing 212. The negative electrode terminal 2522 contacts the negative electrode of the battery 22 if the battery 22 is disposed in the second housing 212.

The RFID module 253 is electrically connected to the antenna 23. The RFID module 253 reads, for example, the RFID tag 6. The RFID module 253 and the antenna 23 form an RFID reader. The RFID module 253 may be configured to form an RFID reader and writer together with the antenna 23 as a configuration for reading and writing the RFID tag 6.

The RFID module 253 controls the antenna 23 and emits a radio wave from the antenna 23 in order to perform wireless communication of data with the RFID tag 6. The RFID module 253 supplies power to the RFID tag 6 by emitting the radio wave from the antenna 23, demodulates the data with the RFID tag 6, and changes a load of the antenna 23, thereby receiving a response wave returned from the RFID tag 6 via the antenna 23. Accordingly, the RFID module 253 reads the data of the RFID tag 6.

As a specific example, the reading of the RFID tag 6 by the RFID module 253 is performed as below. First, the RFID module 253 emits the radio wave from the antenna 23 in order to perform the wireless communication with the RFID tag 6, and the RFID tag 6 starts by receiving the radio wave. Next, if the RFID module 253 amplitude-modulates a carrier wave emitted from the antenna 23 by a signal encoding the communication data, the RFID tag 6 demodulates the amplitude-modulated communication data and changes the load of the antenna of the RFID tag 6 to return the response wave. The RFID module 253 acquires the data of the RFID tag 6 by receiving this response wave via the antenna 23.

The RFID module 253 includes, for example, a control unit 2531 and a storage unit 2532. The RFID module 253 is appropriately provided with a coupler, a filter, an amplifier, a low-pass filter, a balun, and the like according to a reader function of the RFID module 253. The control unit 2531 executes arithmetic processing. The control unit 2531 is a processor serving as a processing circuit. The control unit 2531 performs various processing based on, for example, a program stored in the storage unit and data used in the program. The storage unit 2532 stores a program and data used in the program. The storage unit 2532 is a memory and a storage. The storage unit 2532 is, for example, a read only memory (ROM), a random access memory (RAM), or the like. The storage unit 2532 is, for example, an electrically erasable programmable ROM (EEPROM) (registered trademark), a ferroelectric random access memory (FRAM) (registered trademark), or the like.

The RFID module 253 performs processing of reading the data of the RFID tag 6 received from the antenna 23 by allowing the control unit 2531 to execute the program stored in the storage unit 2532. The RFID module 253 outputs information read from the RFID tag 6 to the communication unit 254.

The communication unit 254 is connected to the terminal 5 by wireless communication. The communication unit 254 transmits and receives the information to and from the terminal 5 by using, for example, a short-range wireless communication technique such as Bluetooth low energy (BLE), which is a standard of Bluetooth (registered trademark). For example, the communication unit 254 is a BLE module.

The communication unit 254 is mounted on the circuit board 251. For example, if the communication unit 254 transmits an advertisement, the terminal 5 receives the advertisement, and the communication unit 254 receives a connection request transmitted from the terminal 5, the communication unit 254 performs generic attribute profile (GATT) communication. For example, if the white cane 1 is used, a user sets the terminal 5 for receiving the information from the communication unit 254 in advance, and the communication unit 254 communicates with the terminal 5 set in advance.

The power receiving unit 255 charges the battery 22 with power transmitted from the power transmitting coil 74 and received by the power receiving coil 24. The power receiving unit 255 supplies the received power to the battery 22. The power receiving unit 255 and the power receiving coil 24 form a power receiving device.

As shown in FIG. 19, the power receiving unit 255 includes, for example, the power receiving circuit 2551, a control circuit 2552, and the resonance capacitor 2553.

The power receiving circuit 2551 converts the received power supplied from the power receiving coil 24 into power that can be supplied to the battery 22. For example, the power receiving circuit 2551 rectifies the received power supplied from the power receiving coil 24 and converts the rectified power into a direct current. The power receiving circuit 2551 is implemented by, for example, a rectifier circuit including a rectifier bridge formed of a plurality of diodes. In this case, a pair of input terminals of the rectifier bridge are connected to the power receiving resonance circuit including the power receiving coil 24 and the resonance capacitor 2553. The power receiving circuit 2551 outputs DC power from a pair of output terminals by performing full-wave rectification on the received power supplied from the power receiving coil 24.

The control circuit 2552 controls an operation of the power receiving circuit 2551. The control circuit 2552 includes, for example, a control unit and a storage unit. The control unit executes arithmetic processing. The control unit is a processor serving as a processing circuit. The control unit performs various processing based on, for example, a program stored in the storage unit and data used in the program. The storage unit stores the program and the data used in the program. The storage unit is a memory and a storage. The storage unit is, for example, a read only memory (ROM), a random access memory (RAM), or the like. The control circuit 2552 may be configured by a microcomputer and an oscillation circuit, and the like.

A charging circuit 256 supplies the power supplied from the power receiving circuit 2551 to the battery 22 as power for charging. For example, the charging circuit 256 converts the power supplied from the power receiving circuit 2551 into a direct current used for charging the battery 22. That is, the charging circuit 256 converts the power supplied from the power receiving circuit 2551 into the power for charging having a predetermined current value and voltage value for charging the battery 22, and supplies the charging power to the battery 22. For example, the charging circuit 256 includes a charging IC including a port for transmitting a charging state to the control unit of the control circuit 2552.

The sensor 26 detects a change in a posture of the ferrule 12 (the case 21) . As shown in FIG. 4, the sensor 26 includes a first sensor 261 and a second sensor 262.

The first sensor 261 detects the posture of the ferrule 12. The first sensor 261 is a motion sensor. For example, the first sensor 261 is a 3-axis gyro sensor capable of detecting an angular velocity or a 3-axis acceleration sensor capable of detecting acceleration. The first sensor 261 maybe a 6-axis sensor capable of detecting the angular velocity and the acceleration. As shown in FIG. 18, for example, the first sensor 261 is mounted on the circuit board 251. The first sensor 261 outputs the detected angular velocity or acceleration as a signal to the control unit 2531.

The second sensor 262 detects rotation of the ferrule 12, specifically, rotation of the first housing 211. As shown in FIG. 4, the second sensor 262 includes, for example, the hall sensor 2621 for detecting magnetism, and one or a plurality of magnets 2622 provided in the umbrella portion 21312 of the third housing 213.

As shown in FIG. 8, the hall sensor 2621 is provided in the holding portion 21231 of the second housing 212. The hall sensor 2621 moves in the circumferential direction if the first housing 211 rotates. For example, the hall sensor 2621 moves in the circumferential direction with respect to the one or the plurality of magnets 2622, thereby detecting magnetism of the magnets 2622 facing the hall sensor 2621 during the movement thereof, and outputting a signal to the control unit 2531.

If the hall sensor 2621 moves to a predetermined location, in other words, if the first housing 211 (the rotation unit) reaches a predetermined rotation angle of the base portion 2131, the magnet 2622 is disposed at a location of facing the hall sensor 2621. For example, if a plurality of magnets 2622 are provided, the plurality of magnets 2622 are disposed at locations where the magnets 2622 are disposed at an equal space in the circumferential direction. As shown in FIG. 7, the plurality of magnets 2622 are provided in the umbrella portion 21312 of the third housing 213. For example, the plurality of magnets 2622 are disposed at an equal space on a coaxial circle coaxial with the axis of the shaft portion 21313 of the third housing 213. For example, four magnets 2622 are provided, and the magnets 2622 are disposed to be spaced with 90 degrees in the circumferential direction.

In the white cane 1 configured as described above, the third housing 213 of the case 21 is formed so that the lid portion 2133 is rotatable with respect to the umbrella portion 21312 via the bearing member 2132. Therefore, if a user holds the white cane 1 and moves the ferrule 12 to the left and right in a state where the ferrule 12 contacts the ground, the case 21 of the ferrule 12 slides on the ground while rotating around the central axis of the shaft portion 21313 of the third housing 213.

If the first housing 211 of the case 21 rotates, the antenna 23 accommodated in the first housing 211 also rotates. Therefore, the ferrule 12 can change a direction of polarization wave even in the case of the linearly polarized wave antenna 23.

Next, the communication system 2 will be described with reference to FIGS. 1 and 2.

As shown in FIGS. 1 and 2, the communication system 2 is formed of the white cane 1 including the ferrule 12 serving as an RFID device, the terminal 5, and the RFID tag 6.

The terminal 5 is a device that can be worn or carried by the user of the white cane 1. The terminal 5 is, for example, a mobile terminal such as a smartphone, a wearable device such as a smart watch, an audio device such as an earphone, a dedicated terminal capable of notifying information by sound and vibration. The terminal 5 may be configured to be built in the grip 111 of the white cane main body 11.

The terminal 5 includes, for example, an input unit 51, a display unit 52, a communication unit 53, a notification unit 54, a storage unit 55, and a control unit 56.

The input unit 51 is a device for receiving a user input such as a button, an operation panel, and a touch panel.

The display unit 52 is a display device such as a liquid crystal display or an organic EL display.

The communication unit 53 is controlled by the control unit 56. The communication unit 53 is any communication interface capable of communicating with the communication unit 254 of the ferrule 12 by using a wireless communication technique. The communication unit 53 may be configured to be able to communicate with a terminal and a network other than the communication unit 254 of the ferrule 12 by using a wired communication technique or a wireless communication technique.

For example, the communication unit 53 may be mounted as a communication module or a communication circuit board. The communication unit 53 transmits and receives information to and from the communication unit 254 of the ferrule 12 by using, for example, a short-range wireless communication technique such as Bluetooth low energy (BLE), which is a standard of Bluetooth (registered trademark). The communication unit 53 can be connected to the network via, for example, a base station by using a short-range wireless communication technique such as Wi-Fi (registered trademark) and a long-range wireless communication technique such as a general-purpose wireless communication technique including a mobile phone line such as long term evolution (LTE) (registered trademark).

The notification unit 54 notifies information to the outside by sound or vibration. For example, the notification unit 54 is a speaker, a vibrator, or the like. The notification unit 54 outputs sound and vibration in different patterns . For example, if the notification unit 54 is the speaker and notifies the information by sound, the notification unit 54 performs notification by sound based on parameters such as different sound types, volumes, and sound lengths set corresponding to the information to be notified. Here, the sound includes a voice. If the notification unit 54 is a vibrator and notifies the information by vibration, the notification unit 54 performs notification by vibration based on parameters such as different vibration types, vibration intensities, and vibration lengths set corresponding to the information to be notified. The notification unit 54 may notify the information by using one of the sound and the vibration, or may notify the information by using both the sound and the vibration.

The storage unit 55 is a so-called memory or storage. The storage unit 55 stores various data. For example, the storage unit 55 stores various control programs, control data, and the like. The storage unit 55 temporarily stores data and the like being processed by the control unit 56. The storage unit 55 stores a setting value required for executing an application program as a database. The storage unit 55 stores an execution result of the application program. The storage unit 55 stores the information of the RFID tag 6 received by the communication unit 53. The storage unit 55 stores the parameters of the notification unit 54 corresponding to the information of the RFID tag 6.

The storage unit 55 may include, for example, an electrically erasable programmable read-only memory (EEPROM) (registered trademark), a read only memory (ROM), a random access memory (RAM), a NAND flash memory, a solid state drive (SSD), and the like.

The control unit 56 is a processor including a processing circuit. The control unit 56 includes, for example, a central processing unit (CPU). Examples of the processor may include a field programmable gate array (FPGA), a digital signal processor (DSP), a graphics processing unit (GPU), or another general-purpose or dedicated processor. One or a plurality of processors are mounted on a circuit board such as a motherboard, a graphic board, and the like.

For example, the control unit 56 implements, based on the control program, the control data, and the like stored in the storage unit 55, various functions such as processing for inputting an external command input by the input unit 51, processing for displaying information on the display unit 52, communication processing by the communication unit 53, and notification processing by the notification unit 54.

The RFID tag 6 is provided in, for example, a station, a road, a building, and the like. For example, in the example of FIG. 1, the RFID tag 6 is embedded under a Braille block of the platform of a station and in a railroad of the platform, and is provided in a railroad vehicle. The RFID tag 6 may be a passive tag or an active tag. The RFID tag 6 includes a tag antenna 62 including a matching circuit and an IC chip 61. If the RFID tag 6 is the active tag, the RFID tag 6 includes a battery, a power supply circuit, and the like.

An example using the communication system 2 will be described. As shown in FIG. 1, a user walks while swinging the white cane 1 in a left and right direction in a state where the ferrule 12 contacts the ground. If the RFID tag 6 is disposed on or near a walking path, the ferrule 12 receives information transmitted from the disposed RFID tag 6 with the antenna 23 and reads the received information with the RFID module 253. Next, the information of the RFID tag 6 is transmitted from the communication unit 254 of the ferrule 12 to the communication unit 254 of the terminal 5, and the terminal 5 performs notification corresponding to the information of the RFID tag 6 by using the notification unit 54.

For example, if the RFID tag 6 is provided on a railroad side of the station platform, the terminal 5 notifies the user of information indicating that the ferrule is located on the railroad side of the platform from the information of the RFID tag 6. If the RFID tag 6 is provided in the railroad vehicle, the terminal 5 notifies the user of a location of the railroad vehicle, for example, a location of a door of the railroad vehicle and information of the vehicle. As described above, the communication system 2 can read the information of the RFID tag 6 on the walking path by the white cane serving as the RFID device, and notify the user of the information by the terminal 5.

Next, the non-contact charging system 3 will be described with reference to FIGS. 19 to 21.

As shown in FIG. 19, the non-contact charging system 3 includes the ferrule 12 serving as a power receiving device including the power receiving unit 255 and the power receiving coil 24, and the power transmitting device 7. The non-contact charging system 3 performs non-contact charging of the ferrule 12 by the power transmitting device 7.

As shown in FIGS. 19 to 21, the power transmitting device 7 includes a power transmitting table 71, a power circuit 72, a power transmitting circuit 73, a power transmitting coil 74, a control circuit 75, a notification unit 76, a resonance capacitor 77, and a power supplying unit 78.

The power transmitting table 71 is formed so that the ferrule 12 can be inserted thereinto. For example, the power transmitting table 71 holds the white cane 1 in an upright posture by inserting the ferrule 12 thereinto. For example, the power transmitting table 71 is formed in a columnar shape. An inner diameter of the power transmitting table 71 is formed so that the ferrule 12 can be inserted thereinto and the posture of the white cane 1 can be maintained. The inner diameter of the power transmitting table 71 is the same as or slightly smaller than an outer diameter of the first housing 211 of the ferrule 12.

The power transmitting table 71 accommodates the power circuit 72, the power transmitting circuit 73, the power transmitting coil 74, the control circuit 75, the notification unit 76, and the resonance capacitor 77. The power transmitting table 71 may be configured to accommodate at least the power transmitting coil 74 therein, and for example, the power circuit 72, the power transmitting circuit 73, the control circuit 75, the notification unit 76, and the like may be provided in a separate case.

The power circuit 72 converts a voltage of DC power supply from the outside into a voltage desirable for an operation of each circuit. The power circuit 72 generates power for causing the power transmitting circuit 73 to transmit power, and supplies the generated power to the power transmitting circuit 73. The power circuit 72 generates power for operating the control circuit 75 and supplies the generated power to the control circuit 75.

The power transmitting circuit 73 generates transmission power to be transmitted from the power transmitting coil 74. The power transmitting circuit 73 supplies the generated transmission power to the power transmitting coil 74. For example, the power transmitting circuit 73 switches the DC power supplied from the power circuit 72 based on the control of the control circuit 75, thereby generating AC power as the transmission power.

The power transmitting coil 74 outputs power that can be received by the power receiving coil 24 according to the transmission power supplied from the power transmitting circuit 73. The power transmitting coil 74 is formed in a cylindrical shape. The power transmitting coil 74 has a power receiving surface for receiving power, which is formed in a cylindrical shape. The power transmitting coil 74 is disposed in the power transmitting table 71 so that a power transmitting surface faces the power receiving surface of the power receiving coil 24 provided in the second housing 212 of the ferrule 12 inserted into the power transmitting table 71. That is, the power transmitting coil 74 is disposed at a height location of the power transmitting table 71, which faces the power receiving coil 24 inserted into the power transmitting table 71 in the radial direction. For example, the power transmitting coil 74 is accommodated in the power transmitting table 71.

For example, the power transmitting coil 74 forms a resonance circuit (a power transmitting resonance circuit) by being connected in series or in parallel to the resonance capacitor 77. If AC power is supplied from the power transmitting circuit 73, the power transmitting coil 74 serving as the power transmitting resonance circuit generates a magnetic field corresponding to the supplied AC power. The power transmitting coil 74 may be configured as a winding structure around which an insulated electric wire is wound, or may be configured by forming a coil pattern on a printed circuit board.

As shown in FIG. 22, a diameter ΦD2 of the power transmitting coil 74 is larger than a diameter ΦB1 of the power receiving coil 24. The power transmitting coil 74 is set to have a diameter desirable for performing the non-contact charging with the power receiving coil 24. That is, the diameter ΦD1 of the power receiving coil 24 and the diameter ΦD2 of the power transmitting coil 74 are set at a predetermined space (D2 - D1) at which the non-contact charging can be desirably performed.

The control circuit 75 controls operations of the power transmitting circuit 73 and the notification unit 76. The control circuit 75 includes, for example, a control unit and a storage unit. The control unit executes arithmetic processing. The control unit is a processor serving as a processing circuit. The control unit performs various processing based on, for example, a program stored in the storage unit and data used in the program. The storage unit stores the program and the data used in the program. The storage unit is a memory and a storage. The storage unit is, for example, a read only memory (ROM), a random access memory (RAM), or the like. The control circuit 75 may be configured by a microcomputer and an oscillation circuit, and the like.

For example, the control circuit 75 switches the notification of the notification unit 76 according to a power transmitting state of the power transmitting device 7 or a charging state of the battery 22. The control circuit 75 controls a frequency of the AC power output from the power transmitting circuit 73, and controls ON and OFF of the operation of the power transmitting circuit 73. For example, the control circuit 75 switches between a state in which a magnetic field is generated in the power transmitting coil 74 (a power transmitting state) and a state in which a magnetic field is not generated in the power transmitting coil 74 (a standby state) by controlling the power transmitting circuit 73. The control circuit 75 may intermittently generate the magnetic field in the power transmitting coil 74 to perform control for changing a timing of the power transmission.

The notification unit 76 is an indicator indicating the state of the power transmitting device 7 or a speaker that notifies the state of the power transmitting device 7 by sound. The notification unit 76 switches a display according to the control of the control circuit 75. For example, the notification unit 76 includes an LED and a speaker, and switches on, off, or display color, and notifies according to the operating state of the power transmitting device 7 by sounds or voices of different patterns.

The power supplying unit 78 is, for example, an AC adapter or a mobile battery. The power supplying unit 78 supplies power to the power circuit 72.

The ferrule 12 serving as the RFID device and the white cane 1 configured as described above is configured to perform the non-contact charging by the power transmitting device 7. The non-contact charging of the ferrule 12 is performed by disposing the ferrule 12 in the power transmitting table 71 and causing the power receiving coil 24 of the ferrule 12 and the power transmitting coil 74 of the power transmitting table 71 to face each other.

Therefore, in the case of the ferrule 12, the battery 22 can be charged without disassembling the case 21 and taking out the battery 22 therefrom. That is, in the case of the ferrule 12, it is not required to take out the battery 22 from the case 21 for charging the battery 22. It is also not required to connect and disconnect a charging cable.

The power receiving coil 24 and the power transmitting coil 74 have a cylindrical shape, and the power receiving coil 24 has a diameter smaller than that of the power transmitting coil 74. The power receiving coil 24 and the power transmitting coil 74 have the same height location. Accordingly, by disposing the ferrule 12 on the power transmitting table 71, the power receiving coil 24 and the power transmitting coil 74 face each other in the radial direction while maintaining a predetermined distance. Therefore, the ferrule 12 can perform the non-contact charging without worrying about a location in the circumferential direction when receiving power.

The ferrule 12 and the non-contact charging system 3 can easily perform charging of the battery 22 of the ferrule 12. Particularly, many users of the white cane 1 are visually impaired. However, since the ferrule 12 is only required to be inserted into the power transmitting table 71, the non-contact charging system 3 can easily charge the white cane 1 even by a visually impaired person. Since a tip of the first housing 211 of the ferrule 12 is formed in a curved surface shape, the tip of the first housing 211 guides insertion if the ferrule 12 is inserted into the power transmitting table 71. Accordingly, the ferrule 12 can be easily inserted into the power transmitting table 71.

In the ferrule 12, the antenna 23 is disposed at a lower end of the second housing 212, and the power receiving coil 24 is disposed away from the antenna 23 in the axial direction of the second housing 212. Accordingly, the antenna 23 and the power receiving coil 24 are disposed away from each other at a predetermined distance in the axial direction in the case 21.

Accordingly, the ferrule 12 can prevent an influence of the power receiving coil 24 if the antenna 23 reads the RFID tag 6. Therefore, the ferrule 12 can stably read the RFID tag 6.

As described above, with the white cane 1, the ferrule (the RFID device) 12, and the non-contact charging system 3 according to one embodiment, the power receiving coil 24 is disposed to deviate from the antenna 23 in the axial direction of the case 21, thereby making it possible to prevent mutual influences between the antenna 23 and the power receiving coil 24.

The white cane 1, the ferrule (the RFID device) 12, the communication system 2, and the non-contact charging system 3 are not limited to the example of the above-described embodiment.

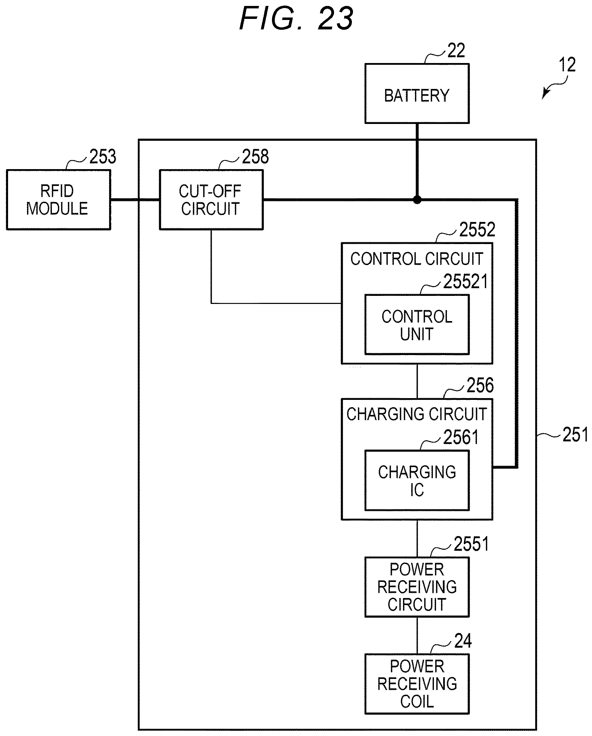

For example, while the ferrule 12 is described as a configuration in which the battery 22 can be charged by the non-contact charging, the ferrule 12 is not limited to the configuration. For example, as shown in FIG. 23, during the charging of the battery 22, the control circuit board 25 of the ferrule 12 may be configured to include a cut-off circuit 258 that cuts off the power supply from the battery 22 to the RFID module 253.

The ferrule (the RFID device) 12 having such a configuration includes the cut-off circuit 258. For example, the cut-off circuit 258 is provided in a circuit between the battery 22 and the RFID module 253. For example, the cut-off circuit 258 switches between conduction and cut-off between the RFID module 253 and the battery 22 in a potential state of FET, transistor, relay, and the like. That is, the cut-off circuit 258 supplies and cuts off the power of the RFID module 253 by switching ON and OFF. The cut-off circuit 258 is controlled by, for example, a control unit 25521 which is a processor of the control circuit 2552.

For example, the charging circuit 256 includes a charging IC 2561 including a port for transmitting a charging state to the control unit of the control circuit 2552. For example, in the charging IC, the port becomes High if charging is performed, and the port becomes Low if charging is not performed. The control circuit 2552 includes the control unit 25521. The control unit 25521 determines the charging state from a state of the port of the charging IC 2561. Next, when determining that the charging state is charging, the control unit 25521 controls the cut-off circuit 258 to change the cut-off circuit 258 to OFF, and to cut off supplying the power to the RFID module 253. When determining that the charging state is non-charging, the control unit 25521 controls the cut-off circuit 258 to change the cut-off circuit 258 to ON, and to supply the power to the RFID module 253.

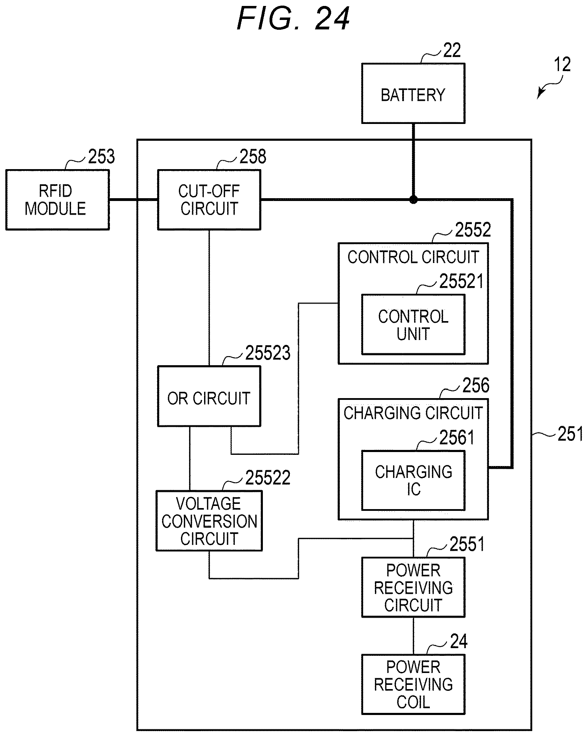

As another example of the ferrule 12 that detects the charging state to supply and cut off the power to the RFID module 253, as shown in FIG. 24, the control circuit board 25 may be configured to include a voltage conversion circuit 25522 and an OR circuit 25523. For example, the voltage conversion circuit 25522 transforms a voltage of the rectifier circuit of the power receiving circuit 2551. If the control unit 25521 determines that charging is performed and a command for cutting off the cut-off circuit 258 is input from the control unit 25521 or if a potential of the rectifier circuit of the power receiving circuit 2551 is received, the OR circuit 25523 switches the cut-off circuit 258 to cut off supplying the power to the RFID module 253.

As described in these examples, the ferrule 12 may be configured to include the cut-off circuit 258 that cuts off the power supply from the battery 22 to the RFID module 253 if the battery 22 is charged. The cut-off circuit 258 may not be configured to be controlled by the control unit 25521 of the control circuit 2552, and for example, the cut-off circuit 258 may be configured to be controlled by the control unit 2531 of the RFID module 253. For example, a control unit, which is another processor, may be mounted on the control circuit board 25, and this control unit may be configured to control the cut-off circuit 258.

In at least one of the above-described embodiments, while the RFID device 12 is used as the ferrule of the white cane 1, the embodiments are not limited thereto. The RFID device 12 may be configured to be used for performing another function other than the white cane 1.

For example, while at least one of the above-described embodiments describes a case in which an electronic device is provided in the second housing 212 of the case 21, the case 21 may be configured to accommodate at least the antenna 23 and the power receiving coil 24, and another electronic device may be configured to be accommodated in the white cane main body 11 and the grip 111. The electronic device described above may be configured to be accommodated in the second housing 212.

While at least one of the above-described embodiments describes a configuration in which the RFID device 12 includes the first sensor 261 which is the motion sensor and the second sensor 262 which is the hall sensor as the sensor 26, the configuration is not limited thereto. As long as the sensor 26 can detect the rotation of the first housing 211 and the lid portion 2133 of the third housing 213 of the case 21, which are the rotation unit, if the white cane 1 is used, the sensor 26 may be configured to include only one of the first sensor 261 and the second sensor 262, or may be configured to include another sensor.

With any one of the white cane 1, the communication system 2, the non-contact charging system 3, and the RFID device 12 configured as described above, the mutual influences between the antenna and the power receiving coil can be prevented.

## Claims

1. An RFID device (12) comprising:
a case (21) including a rotation mechanism (21313, 2132);
an antenna (23) disposed in the case; and
a cylindrical power receiving coil (24) disposed in the case (21) away from the antenna (23) and extending in an axial direction of the rotation mechanism (21313, 2132), and connected to a power receiver (255) configured to charge a battery (22);
wherein the case (21) includes a third housing (213) having a shaft portion (21313) as the rotation mechanism and a first housing (211) having a tubular shape disposed coaxially with the shaft portion, the antenna (23) and the cylindrical power receiving coil (24) being disposed in the first housing (211).

2. The device (12) according to claim 1, further comprising:
an RFID module (253);
a communication interface configured to transmit information read by the RFID module (253) to the outside, wherein
the battery (22), the power receiver, the RFID module (253), and the communication interface are provided in the case (21).

3. The device (12) according to any of claims 1 to 2, wherein the RFID device includes a ferrule.

4. The device (12) according to any of claims 1 to 3, wherein the RFID device further comprises a plurality of housings.

5. The device (12) according to claim 4, wherein the plurality of housings includes at least one of
a first housing formed of resin,
a first housing having a tubular shape,
a first housing which accommodates the antenna (23) and the power receiving coil (24), and
a first housing having an outer shape having a spherical shape, a polygonal columnar shape, or a gourd shape.

6. The device (12) according to claim 4 or 5, wherein the plurality of housings includes a first housing, a second housing (212) and third housing, the first housing contacting the third housing, the second housing (212) disposed between the first housing and the third housing.

7. The device (12) according to any of claims 4 to 6, wherein the plurality of housings includes a first housing, a second housing (212) and a third housing, the first housing including one or more insertion portions arranged to insert into one or more respective grooves of the third housing.

8. The device (12) according to claim 7, wherein the first housing includes a guide display arranged adjacent to the one or more insertion portions.

9. The device (12) according to any of claims 4 to 8, wherein the plurality of housings includes a first housing having a rib formed integrally on an upper surface of a bottom portion of the first housing.

10. The device (12) according to any of claims 4 to 9, wherein the plurality of housings includes a first housing and a second housing (212), wherein an outer diameter of the second housing (212) is less than an inner diameter of the first housing.

11. The device (12) according to any of claims 4 to 10, wherein the plurality of housings includes the first housing, a second housing (212) and the third housing (213), the third housing having the shaft portion (21313) and a bearing member (2132) which form the rotation mechanism (21313, 2132).

12. A non-contact charging system (3) including:
a white cane, and
the RFID device (12) of any of claims 1 to 11, wherein the RFID device is mounted on the white cane.

13. A non-contact charging system (3) according to claim 12, further comprising:
a cylindrically formed power transmitting table including a power transmitting device, the power transmitting device including a power transmitting coil (74) and a power transmitting circuit (73), and enabling the RFID device to be disposed therein.

14. The non-contact charging system (3) according to any of claims 12-13, wherein:
the power receiving coil (24) is disposed coaxially with a rotation axis of the rotation mechanism, and
a diameter of the power receiving coil (24) is smaller than a diameter of a cylindrical power transmitting coil (74) that is configured to perform non-contact charging with the power receiving coil (24) .

15. The non-contact charging system (3) according to any of claims 12-14, further comprising:
a cut-off circuit (258) configured to cut off power supply from the battery (22) to an RFID module (253) connected to the antenna (23) when the power receiving coil (24) receives power from the power transmitting coil (74) .

## Patentansprüche

1. RFID-Vorrichtung (12), die Folgendes umfasst:
ein Gehäuse (21), das einen Drehmechanismus (21313, 2132) einschließt;
eine Antenne (23), die in dem Gehäuse angeordnet ist; und
eine zylindrische Leistungsempfangsspule (24), die in dem Gehäuse (21) von der Antenne (23) entfernt angeordnet ist und sich in einer axialen Richtung des Drehmechanismus (21313, 2132) erstreckt und mit einem Leistungsempfänger (255) verbunden ist, der dazu konfiguriert ist, eine Batterie (22) zu laden;
wobei das Gehäuse (21) ein drittes Gehäuse (213), das einen Wellenabschnitt (21313) als den Drehmechanismus aufweist, und ein erstes Gehäuse (211), das eine röhrenförmige Form aufweist, die koaxial zu dem Wellenabschnitt angeordnet ist, einschließt, wobei die Antenne (23) und die zylindrische Leistungsempfangsspule (24) in dem ersten Gehäuse (211) angeordnet sind.

2. Vorrichtung (12) nach Anspruch 1, weiter umfassend:
ein RFID-Modul (253);
eine Kommunikationsschnittstelle, die dazu konfiguriert ist, Informationen, die durch das RFID-Modul (253) gelesen werden, nach außen zu übertragen, wobei
die Batterie (22), der Leistungsempfänger, das RFID-Modul (253) und die Kommunikationsschnittstelle in dem Gehäuse (21) bereitgestellt sind.

3. Vorrichtung (12) nach einem der Ansprüche 1 bis 2, wobei die RFID-Vorrichtung eine Ferrule einschließt.

4. Vorrichtung (12) nach einem der Ansprüche 1 bis 3, wobei die RFID-Vorrichtung weiter eine Vielzahl von Gehäusen umfasst.

5. Vorrichtung (12) nach Anspruch 4, wobei die Vielzahl von Gehäusen mindestens eines umfasst von
einem ersten Gehäuse, das aus Harz gebildet ist,
einem ersten Gehäuse, das eine röhrenförmigen Form aufweist,
einem ersten Gehäuse, das die Antenne (23) und die Leistungsempfangsspule (24) unterbringt, und
einem ersten Gehäuse, das eine äußere Form aufweist, die eine kugelförmige Form, eine polygonale Säulenform oder eine Kalebassenform aufweist.

6. Vorrichtung (12) nach Anspruch 4 oder 5, wobei die Vielzahl von Gehäusen ein erstes Gehäuse, ein zweites Gehäuse (212) und ein drittes Gehäuse einschließt, wobei das erste Gehäuse das dritte Gehäuse berührt und das zweite Gehäuse (212) zwischen dem ersten Gehäuse und dem dritten Gehäuse angeordnet ist.

7. Vorrichtung (12) nach einem der Ansprüche 4 bis 6, wobei die Vielzahl von Gehäusen ein erstes Gehäuse, ein zweites Gehäuse (212) und ein drittes Gehäuse einschließt, wobei das erste Gehäuse einen oder mehrere Einführungsabschnitte einschließt, die dazu angeordnet sind, in eine oder mehrere jeweilige Nuten des dritten Gehäuses eingeführt zu werden.

8. Vorrichtung (12) nach Anspruch 7, wobei das erste Gehäuse eine Führungsanzeige einschließt, die benachbart zu dem einen oder den mehreren Einführungsabschnitten angeordnet ist.

9. Vorrichtung (12) nach einem der Ansprüche 4 bis 8, wobei die Vielzahl von Gehäusen ein erstes Gehäuse einschließt, das eine Rippe aufweist, die einstückig auf einer oberen Fläche eines unteren Abschnitts des ersten Gehäuses gebildet ist.

10. Vorrichtung (12) nach einem der Ansprüche 4 bis 9, wobei die Vielzahl von Gehäusen ein erstes Gehäuse und ein zweites Gehäuse (212) einschließt, wobei ein Außendurchmesser des zweiten Gehäuses (212) kleiner als ein Innendurchmesser des ersten Gehäuses ist.

11. Vorrichtung (12) nach einem der Ansprüche 4 bis 10, wobei die Vielzahl von Gehäusen das erste Gehäuse, ein zweites Gehäuse (212) und das dritte Gehäuse (213) einschließt, wobei das dritte Gehäuse den Wellenabschnitt (21313) und ein Lagerelement (2132) aufweist, die den Drehmechanismus (21313, 2132) bilden.

12. Kontaktloses Ladesystem (3), das Folgendes einschließt:
einen Blindenstock und
die RFID-Vorrichtung (12) nach einem der Ansprüche 1 bis 11, wobei die RFID-Vorrichtung an dem Blindenstock montiert ist.

13. Kontaktloses Ladesystem (3) nach Anspruch 12, weiter umfassend:
einen zylindrisch geformten Leistungsübertragungstisch, der eine Leistungsübertragungsvorrichtung einschließt, wobei die Leistungsübertragungsvorrichtung eine Leistungsübertragungsspule (74) und eine Leistungsübertragungsschaltung (73) einschließt und der RFID-Vorrichtung ermöglicht, darin angeordnet zu sein.

14. Kontaktloses Ladesystem (3) nach einem der Ansprüche 12-13, wobei:
die Leistungsempfangsspule (24) koaxial zu einer Drehachse des Drehmechanismus angeordnet ist und
ein Durchmesser der Leistungsempfangsspule (24) kleiner als ein Durchmesser einer zylindrischen Leistungsübertragungsspule (74) ist, die dazu konfiguriert ist, ein kontaktloses Aufladen mit der Leistungsempfangsspule (24) durchzuführen.

15. Kontaktloses Ladesystem (3) nach einem der Ansprüche 12-14, weiter umfassend:
eine Unterbrechungsschaltung (258), die dazu konfiguriert ist, eine Leistungsversorgung von der Batterie (22) an ein RFID-Modul (253), das mit der Antenne (23) verbunden ist, zu unterbrechen, wenn die Leistungsempfangsspule (24) Leistung von der Leistungsübertragungsspule (74) empfängt.

## Revendications

1. Dispositif RFID (12) comprenant :
un boîtier (21) incluant un mécanisme de rotation (21313, 2132) ;
une antenne (23) disposée dans le boîtier ; et
une bobine cylindrique de réception d'énergie (24) disposée dans le boîtier (21) à distance de l'antenne (23) et s'étendant dans une direction axiale du mécanisme de rotation (21313, 2132), et reliée à un récepteur d'énergie (255) configuré pour charger une batterie (22) ;
dans lequel le boîtier (21) inclut un troisième logement (213) présentant une partie d'arbre (21313) en tant que mécanisme de rotation et un premier logement (211) présentant une forme tubulaire disposé de manière coaxiale par rapport à la partie d'arbre, l'antenne (23) et la bobine cylindrique de réception d'énergie (24) étant disposées dans le premier logement (211).

2. Dispositif (12) selon la revendication 1, comprenant en outre :
un module RFID (253) ;
une interface de communication configurée pour transmettre des informations lues par le module RFID (253) vers l'extérieur, dans lequel
la batterie (22), le récepteur d'énergie, le module RFID (253), et l'interface de communication sont disposés dans le boîtier (21).

3. Dispositif (12) selon l'une quelconque des revendications 1 à 2, dans lequel le dispositif RFID inclut un embout.

4. Dispositif (12) selon l'une quelconque des revendications 1 à 3, dans lequel le dispositif RFID comprend en outre une pluralité de logements.

5. Dispositif (12) selon la revendication 4, dans lequel la pluralité de logements incluent au moins l'un parmi
un premier logement constitué de résine,
un premier logement présentant une forme tubulaire,
un premier logement qui reçoit l'antenne (23) et la bobine de réception d'énergie (24), et
un premier logement présentant une forme externe présentant une forme sphérique, une forme de colonne polygonale, ou une forme de gourde.

6. Dispositif (12) selon la revendication 4 ou la revendication 5, dans lequel la pluralité de logements inclut un premier logement, un deuxième logement (212) et un troisième logement, le premier logement étant en contact avec le troisième logement, le deuxième logement (212) étant disposé entre le premier logement et le troisième logement.

7. Dispositif (12) selon l'une quelconque des revendications 4 à 6, dans lequel la pluralité de logements inclut un premier logement, un deuxième logement (212) et un troisième logement, le premier logement incluant une ou plusieurs parties d'insertion conçues pour être insérées dans une ou plusieurs rainures respectives du troisième logement.

8. Dispositif (12) selon la revendication 7, dans lequel le premier logement inclut un écran de guidage agencé adjacent aux une ou plusieurs parties d'insertion.

9. Dispositif (12) selon l'une quelconque des revendications 4 à 8, dans lequel la pluralité de logements inclut un premier logement présentant une nervure formée d'un seul tenant sur une surface supérieure d'une partie de fond du premier logement.

10. Dispositif (12) selon l'une quelconque des revendications 4 à 9, dans lequel la pluralité de logements inclut un premier logement et un deuxième logement (212), dans lequel un diamètre externe du deuxième logement (212) est inférieur à un diamètre interne du premier logement.

11. Dispositif (12) selon l'une quelconque des revendications 4 à 10, dans lequel la pluralité de logements inclut le premier logement, un deuxième logement (212) et le troisième logement (213), le troisième logement présentant la partie d'arbre (21313) et un élément de palier (2132) qui forment le mécanisme de rotation (21313, 2132).

12. Système de charge sans contact (3) incluant :
une canne blanche, et
le dispositif RFID (12) selon l'une quelconque des revendications 1 à 11, dans lequel le dispositif RFID est monté sur la canne blanche.

13. Système de charge sans contact (3) selon la revendication 12, comprenant en outre :
une table de transmission d'énergie de forme cylindrique incluant un dispositif de transmission d'énergie, le dispositif de transmission d'énergie incluant une bobine de transmission d'énergie (74) et un circuit de transmission d'énergie (73), et permettant au dispositif RFID d'être disposé dans celle-ci.

14. Système de charge sans contact (3) selon l'une quelconque des revendications 12 à 13, dans lequel :
la bobine de réception d'énergie (24) est disposée de manière coaxiale à un axe de rotation du mécanisme de rotation, et
un diamètre de la bobine de réception d'énergie (24) est inférieur au diamètre d'une bobine cylindrique de transmission d'énergie (74) qui est configurée pour réaliser la charge sans contact avec la bobine de réception d'énergie (24).

15. Système de charge sans contact (3) selon l'une quelconque des revendications 12 à 14, comprenant en outre :
un coupe-circuit (258) configuré pour couper l'alimentation électrique de la batterie (22) vers un module RFID (253) connecté à l'antenne (23) quand la bobine de réception d'énergie (24) reçoit de l'énergie de la bobine de transmission d'énergie (74).
